# EUROPÄISCHE PATENTSCHRIFT

(11) **EP 1 188 591 B1**
(45) Veröffentlichungstag und Bekanntmachung des Hinweises auf die Patenterteilung: **29.03.2006**
(21) Anmeldenummer: 01121808.8
(22) Anmeldetag: 11.09.2001
(51) Int. Cl.: B60J 1/20

(54) **Fensterrollo für gekrümmte oder nicht rechteckige Fahrzeugfenster**
Window roller blind for curved or non rectangular window panes
Store de fenêtre à rouleau pour vitres de véhicule courbées ou non rectangulaires

(30) Priorität: 19.09.2000 DE 10046553
(43) Veröffentlichungstag der Anmeldung: 20.03.2002
(60) Teilanmeldung: 05018929.9
(73) Patentinhaber: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Rüger, Barthelt & Abel Patentanwälte

(56) Entgegenhaltungen:
- EP-A- 0 945 292
- DE-A- 3 427 772
- DE-A- 19 741 863
- US-A- 5 551 744
- US-A- 5 860 466
- US-A- 6 079 474

## Beschreibung

Um den Innenraum von Kraftfahrzeugen gegenüber starker Sonneneinstrahlung zu schützen ist es bekannt, Fensterrollos zu verwenden. Die bislang am weitesten verbreitete Art von Fensterrollos sind sogenannte Heckfensterrollos. In der EP 87 103 302.3 ist ein solches Heckscheibenrollo beschrieben.

Das bekannte Heckscheibenrollo weist einen Sockel auf, in dem eine Wickelwelle drehbar gelagert ist. Die Wickelwelle ist mit Hilfe eines Federmotors im Aufwickelsinne einer Rollobahn elastisch vorgespannt.

Die Rollbahn, die mit einer Querkante an der Wickelwelle befestigt ist, ist mit ihrer anderen Querkante mit einem Zugstab verbunden. An dem Zugstab greifen zwei Schwenkhebel an, die neben der Wickelwelle um zu der Wickelwelle rechtwinklig Achsen schwenkbar sind. Die Schwenkhebel sind in Richtung senkrecht zu der Ebene, die durch die aufgespannte Rollobahn definiert wird, biegesteif und haben die Funktion im aufgespannten Zustand den Zugstab gegen die Scheibe angedrückt zu halten, bzw. die Rollobahn gegen die Kraft des Federmotors von der Wickelwelle abzuwickeln.

Die Rollobahn des bekannten Heckscheibenrollos hat einen trapezförmigen Zuschnitt, der die komplizierte Form der Heckscheibe annähert. Dadurch soll eine möglichst gute Abschattung erreicht werden, indem nur geringe Flächen des Henkfensters von der Rollobahn nicht abgeschattet werden.

Aufgrund der Konstruktion bildet die aufgespannte Rollobahn jedoch immer eine Ebene, die sehnenförmig vor der in der Regel stark gekrümmten Heckscheibe verläuft. Da Heckscheiben von Limousinen bezüglich mehrerer Achsen nicht unerheblich gekrümmt sind, liegt das aufgespannte Heckscheibenrollo relativ weit in der Fahrgastzelle.

Es ist außerdem bekannt, die Schwenkhebel, die die Zugstange tragen, am Ende des Schwenkhubs bei ausgefahrener Rollobahn um die Längsachse zu drehen. Hierdurch wird die Zugstange geringfügig parabelförmig gekrümmt, womit die Rollobahn im unmittelbaren Anschluss an die Zugstange in der gleichen Weise gekrümmt wird. Die Wickelwelle jedoch bleibt gerade, so dass die Rollobahn ausgehend von der gekrümmten Gestalt in der Nähe der Zugstange in eine Ebene oder gerade Gestalt am Auslaufschlitz übergeht.

Schließlich ist es aus dem Stand der Technik bekannt, die Vorderkante von Heckscheibenrollos mittels eines Zugstabes zu führen, der endseitig in zwei Führungsschienen läuft. Auch im letzteren Fall bildet die aufgespannte Rollobahn eine Ebene, deren Ränder nur angenähert der gekrümmten Kontur der Scheibe folgen.

Ein weiterer Nachteil dieser Lösung besteht im übrigen darin, dass die Führungsschienen und die sonstige Antriebsmechanik des Fensterrollos getrennt im Fahrzeug montiert werden müssen.

Die Verhältnisse sind dabei besonders ungünstig, wenn die Rollobahn im Fahrzeugdach untergebracht wird. An der Oberkante hat das Heckfenster die geringste Breite. An diese Breite muss der Zuschnitt angepasst sein, womit bei ausgefahrenem Rollo im unteren Bereich große dreieckförmige Bereich verbleiben, die nicht abgedeckt sind.

Um eine bessere Abschattung über die Breite einer trapezförmigen Frontscheibe zu bekommen, ist es aus der US 5,551,744 bekannt, eine Rollobahn zu verwendenden, die quer zur Bewegungsrichtung in drei Längsstreifen aufgeteilt ist. Die einzelnen Längsstreifen sind durch plissierte Bereiche miteinander verbunden. Die Täler und Scheitel der durch die Plissierung entstandenen Längsfalten verlaufen rechtwinklig zur Achse der Wickelwelle. Durch die Plissierung entstehen zwei Bereiche, die sich in Richtung parallel zur Ausfahrbewegung erstrecken, in denen die Rollobahn deutlich dicker ist, als in den dazwischen liegenden Bereichen.

Zum Kompensieren einer gegenüber der Wickelwelle eines Fensterrollos schräg verlaufenden Fensterkante ist es in der US 5,860,466 vorgesehen, den unmittelbaren an das Auszugsprofil angrenzenden Bereiche der Rollobahn in Richtung parallel zur Bewegungsrichtung elastisch auszubilden.

Ausgehend hiervon ist es Aufgabe der Erfindung, ein Fensterrollo insbesondere für Kraftfahrzeuge zu schaffen, das einen besseren Benutzer- und/oder Montagekomfort bietet.

Diese Aufgabe wird erfindungsgemäß durch das Fensterrollo mit den Merkmalen des Anspruches 1 oder 2 gelöst.

Ein besserer Benutzerkomfort und eine bessere designmäßige Gestaltung lassen sich erreichen, wenn es gelingt, bei ausgefahrenem Fensterrollo das Fenster exakt bis zu den Rändern abzuschatten. Um dies zu erreichen, wird erfindungsgemäß ein Rollobahnmittel verwendet, das in der Breite veränderlich ist. Die Breitenrichtung ist hierbei jene Richtung, die quer zur Bewegungsrichtung beim Ein- und Ausfahren der Rollobahnmittel liegt. Aufgrund der Breitenverstellung des Rollobahnmittels wird es möglich, die Fensteröffnung praktisch vollständig auszufüllen, und zwar auch dann, wenn die Seitenränder des Fensters nicht parallel, sondern gekrümmt oder divergierend verlaufen, bzw die Rollobahn in einem Bereich verstaut wird, der nur einen kurzen Auslaufschlitz zulässt.

Unter "in der Breite verstellbar" sei hier ein Rollobahnmittel verstanden, das so gestaltet ist, dass zwei beliebige Punkte auf der Längskante, die sich auf gleicher Höhe befinden, während des Ein- und Ausfahrens eine relative Abstandsänderung erfahren.

Bei dem erfindungsgemäßen Fensterrollo kann das Rollobahnmittel aus einem lediglich in der Breite veränderlichen Material bestehen, während es in Längsrichtung, d.h. parallel zum Bewegungsweg praktisch undehnbar ist.

Als Rollobahnmittel kommen Folien in Frage, die die gewünschte elastische Eigenschaft haben, beispielsweise Folien aus einem Elastomer. Dabei kann bei zu starker Lichtabschwächungswirkung der Lichteintritt verbessert werden, wenn die Folie gelocht wird.

Eine andere Möglichkeit die Rollobahn herzustellen besteht in der Verwendung von Maschenware, also einem Gewirk oder Gestrick. Solche Materialen sind, wie man dies von Kleidungsstücken kennt, sowohl in Längs- als auch in Querrichtung dehnbar. Wenn die Dehnbarkeit in Längsrichtung unerwünscht ist, kann zusätzlich das Gewirk in Längsrichtung gesehen mit undehnbaren Fäden versehen sein.

Die Rücksprungkraft bei der Querdehnung wird verbessert, wenn die Maschenware aus undehnbaren Fäden und elastisch dehnbaren Fäden beispielsweise Elastan™ gewirkt oder gestrickt ist. Die Ware kann als plattierte Ware hergestellt werden. Der Elastanfaden befindet sich nur auf einer Seite und ist dem UV-Licht nicht unmittelbar ausgesetzt.

Wenn lediglich eine Rollobahn verwendet wird, die quer dehnbar ist, sind Mittel notwendig, um im ausgefahrenen Zustand die Rollobahn entsprechend in die Breite zu ziehen. Dies lässt sich am einfachsten mit Hilfe von Führungsschienen erreichen, die einen entsprechend konturierten Verlauf haben. Mit den Rändern des Rollobahnmittels sind Streckmittel versehen, die in Nuten der Führungsschienen laufen und die Rollobahn entsprechend in die Breite ziehen.

Die Streckmittel können Keder sein, die längs des gesamten Randes der Rollobahn vorhanden sind und mit einer weggespreizten Lippe versehen sind. Die Lippe kann sich hinter dem hintergriffigen Rand einer entsprechend gestalteten Nut verhaken, um die gewünschte Querstreckung zu erreichen.

Der Keder wird beim Einfahren der Rollobahn mit auf die Wickelwelle aufgewickelt, wozu er beim Aufwickeln entsprechend aus den Führungsschienen herausläuft. Es genügt, wenn beim vollständig eingefahrenen Zustand des Fensterrollos ein kurzer Abschnitt der Rollobahn in den Führungsschienen geführt bleibt. Beim Ausziehen bzw. Abwickeln, zieht automatisch der in den Führungsschienen sitzende Abschnitt des Keders den noch freien folgenden Abschnitt hinter sich in die Führungsschiene hinein.

Die Führungsschienen können wahlweise mit einer einzigen Nut für die Streckmittel und den Zugstab oder mit zwei getrennten Nuten versehen sein, wobei die eine nur für den Keder und die andere nur für den Zugstab vorgesehen ist.

Die Betätigung des Zugstabs kann in jeder beliebigen Weise erfolgen, wie sie aus dem Stand der Technik, bzw. aus der Praxis bekannt sind, beispielsweise mit Hilfe von SUflexwellen™, Seilzügen oder dergleichen.

Anstelle von Führungsschienen mit Nuten kommen auch stabförmige Führungsschienen in Frage, auf denen Ringe gleiten, die mit den Rändern des Rollobahnmittels verbunden sind. Die Verstaueinrichtung wird in diesem Falle zu einem einfachen Schacht, in dem das Rollobahnmittel ziehharmonikaartig oder leporelloartig gefaltet abgelegt wird.

Eine andere Möglichkeit die Rollobahnmittel zu verstauen besteht in der Verwendung einer Wickelwelleneinrichtung, die sich aus einer oder mehreren Wickelwellen zusammensetzt.

Wenn die Rollobahnmittel lediglich sehnenartig vor der Heckscheibe verlaufen sollen, genügt eine einzige durchgehende Wickelwelle.

Wenn auch im Bereich des Auslaufschlitzes für die Rollobahnmittel eine gekrümmte Gestalt gewünscht ist, ist es zweckmäßig die Wickelwelleneinrichtung aus zwei oder mehr einzelnen Wickelwellen zusammenzusetzen, die gegebenenfalls getrieblich miteinander gekuppelt sind. Die Achsen der Wickelwellen schließen dann jeweils miteinander Winkel ein, die von 180° verschieden sind, damit polygonartig der Verlauf der betreffenden Scheibenkante angenähert werden kann.

Auch bei Verwendung einer einzigen in der Breite dehnbaren Rollobahn besteht die Möglich die Rollobahn auf eine oder mehrere im Winkel voneinander abweichende Wickelwellen aufzuwickeln. Die einzelnen Wickelwellen sind dabei getrieblich miteinander gekoppelt, damit sie synchron laufen.

Die Rollobahnen können aus einer lichtdurchlässigen Folie bestehen, deren Lichtdurchlässigkeit beispielsweise durch Lochen in gewünschter Weise festgelegt werden kann.

Als Führungsmittel kommen bei dieser Ausführungsform zwei Varianten in Frage. Die eine Variante besteht in der Verwendung der bekannten Führungsschienen, in denen der Zugstab endseitig geführt ist und an dem wenigstens zwei Rollobahnen mit einer Querkante befestigt sind. Da bei dieser Ausführungsform die Längskanten der Rollobahnmittel nicht mit Querkräften beaufschlagt werden, brauchen sie in den Führungsschienen auch nicht geführt oder gehalten zu werden. Unter diesen Umständen kann zum Aufspannen der Rollobahn auch eine Hebellösung zum Einsatzkommen. Diese sieht wenigstens zwei schwenkbare starre Kniehebel vor, die bei der Wickelwelle schwenkbar gelagert sind und deren anderes Ende gleitend, im Falle des Schwenkhebels, oder gelenkig, im Falle des Kniehebels, mit dem Zugstab verbunden ist. Auch hierbei wird vorzugsweise ein Zugstab verwendet, der für sämtliche Rollobahnen gemeinsam ist und dessen Winkel im Wesentlichen mit dem Winkel übereinstimmt, mit dem die Wickelwellen für die Rollobahn zueinander angeordnet sind.

Das Verstaumittel kann bei dieser Art von Fensterrollo ein einfacher Schacht sein, in dem die Rollobahnen gefaltet abgelegte werden, oder sie kann eine Wickelwelleneinrichtung umfassen, auf der die Rollbahnen aufgewickelt werden.

Die Wickelwelleneinrichtung setzt sich zweckmäßigerweise aus mehreren synchron miteinander bewegten Wickelwellen zusammen, die in einem entsprechenden Winkel zueinander angeordnet sind, um die polygonartige Annäherung an die Scheibenkrümmung zu erreichen.

Im übrigen sind Weiterbildungen der Erfindung Gegenstand von Unteransprüchen. Dabei werden ausdrücklich auch solche Kombinationen von Unteransprüchen mit beansprucht, für die in den Anmeldungsunterlagen kein Ausführungsbeispiel enthalten ist.

In der Zeichnung sind Ausführungsbeispiele des Gegenstandes der Erfindung dargestellt, es zeigen:
- Fig. 1: ein Kraftfahrzeug in einer Rückansicht mit einem ausgezogenen Fensterrollo gemäß Erfindung,
- Fig. 2: das Fahrzeug nach Fig. 1 mit teilweise eingefahrenem Heckfensterrollo,
- Fig. 3: das Fensterrollo des Fahrzeugs nach Figur 1 in einer Detailansicht,
- Fig. 4: ein Kraftfahrzeug in einer Rückansicht mit einem ausgezogenen Fensterrollo gemäß Erfindung, das im Dach untergebracht ist,
- Fig. 5: das Fahrzeug nach Fig. 4 mit teilweise eingefahrenem Heckfensterrollo,
- Fig. 6: das Fensterrollo des Fahrzeugs nach Figur 5 in einer Detailansicht,
- Fig. 7: die Führungsschiene des Fensterrollos nach Figur 7 im Querschnitt unter Veranschaulichung des Keders,
- Fig. 8: eine alternative Anordnung der Wickelwellen in einer schematisierten Draufsicht und ein Fensterrollo in einer schematischen Darstellung zur Unterbringung im Dach.

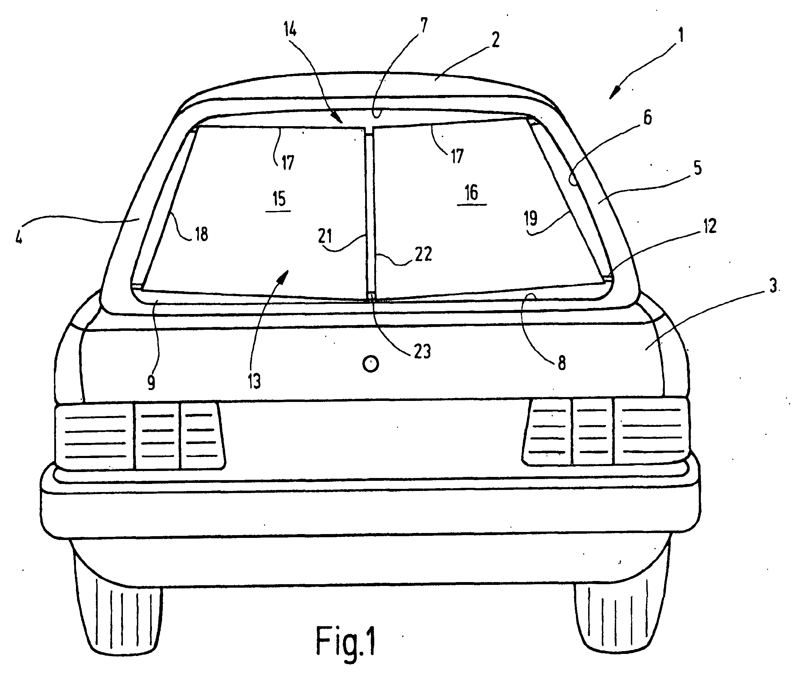

Fig. 1 zeigt in einer schematischen Darstellung die Rückansicht eines PKW 1 mit einem Dach 2, einem Kofferraum 3 sowie zwei C-Säulen 3 und 5. Zwischen den beiden C-Säulen 4 und 5 befindet sich eine Heckfensteröffnung 6, die nach oben von einer Dachhinterkante 7 und unten von einer Fensterbrüstung 8 begrenzt ist. In der Heckfensteröffnung 6 sitzt in bekannter Weise, beispielsweise mittels Fenstergummi eingeklebt, eine Heckescheibe.

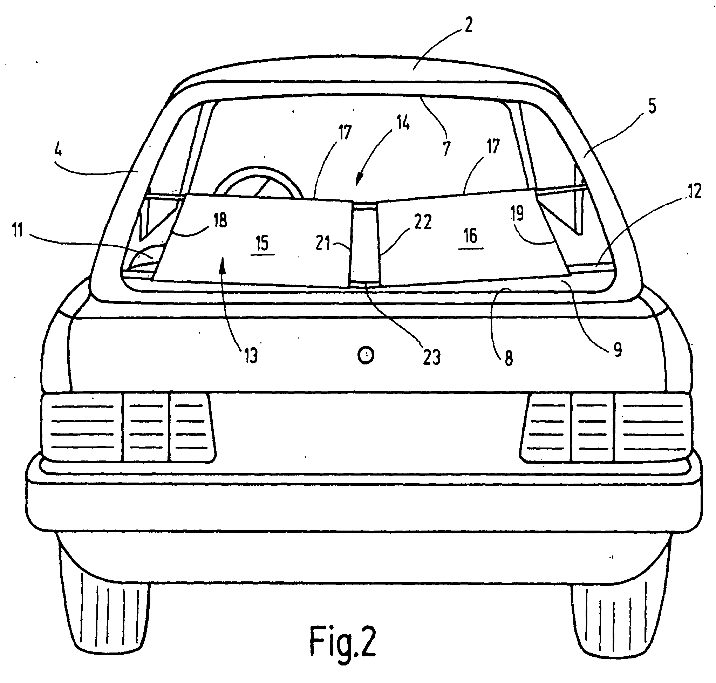

Im Inneren des PKW 1 befindet sich vor der Innenseite der Heckscheibe eine Hutablage 9, die sich zwischen der Fensterunterkante 8 und einer in Figur 2 abschnittsweise erkennbaren Rücksitzlehne 11 horizontal erstreckt. In der Hutablage 9 verläuft ein abgeknickt oder abgewinkelt sich erstreckender Auslaufschlitz 12.

Der Auslaufschlitz 12 gehört zu einem Heckfensterrollo 13, dessen Rollobahnmittel 14 sich aus zwei undehnbaren Rollobahnen 15 und 16 zusammensetzt. Die beiden Rollobahnen 15 und 16 sind in Figur 1 durch den Rolloschlitz 12 nach oben ausgefahren, bis sich ihre obere oder Querkante 17 in der Nähe der Dachunterkante 7 befindet. Äußere seitliche Ränder 18 und 19 der Rollbahnmittel 14 bzw. der beiden Rollobahnen 15 und 16 verlaufen angenähert parallel zu den seitlichen Fensterberandungen, die durch die beiden C-Säulen 4 und 5 definiert sind. Im mittleren Bereich liegen die beiden Rollobahnen 15 und 16 mit ihren inneren Längskanten 21 und 22 sehr dicht beieinander. Sämtliche Längskanten 18..22 sind gerade und nicht geführt.

Die beiden Rollobahnen 14 und 15 erstrecken sich im ausgezogenen Zustand längs einer Ebene, wobei die durch die beiden Rollobahnen 14 und 15 definierten Ebenen einen Winkel miteinander einschließen, derart, dass eine polygonale Annäherung an die Krümmung der Heckfensterscheibe erfolgt. Dementsprechend ist auch der Auslaufschlitz 12 abgeknickt, d.h. ausgehend von einer mittleren Stelle 23 verläuft zu jeder Seite ein Abschnitt des Auslaufschlitzes 12, und zwar so, dass die beiden Teile einen entsprechenden Winkel miteinander einschließen.

Aufgrund der besonderen Einbauverhältnisse ändert sich beim Ein- und Ausfahren die Breite der Rollobahnmittel 14, d.h. zwei beliebige auf den äußeren Längskanten 18 und 19 gelegene Punkte, die sich auf gleicher Höhe befinden, ändern ihren relativen Abstand voneinander, wenn die Rollobahnmittel 14 ausgehend von der vollständig eingefahrenen Stellung, in der die Querkante 17 praktisch in dem Auslaufschlitz 12 verschwunden ist, in die vollständig ausgefahrene Stellung überführt wird, wie dies Figur 1 zeigt. Die relative Abstandsänderung beim Ein- bzw. Ausfahren, die auch die Längskanten 21 und 22 betrifft, wird in der teilausgefahrenen Stellung nach Figur 2 erkennbar.

Das Fensterrollo 13 hat den Vorteil, dass die Rollbahnmittel 14 auch bei einem stark gekrümmten Verlauf der Heckscheibe relativ dich an die Scheibe herangebracht werden können, obwohl sie abschnittsweise sehnenartig vor der Innenseite der Heckscheibe liegen.

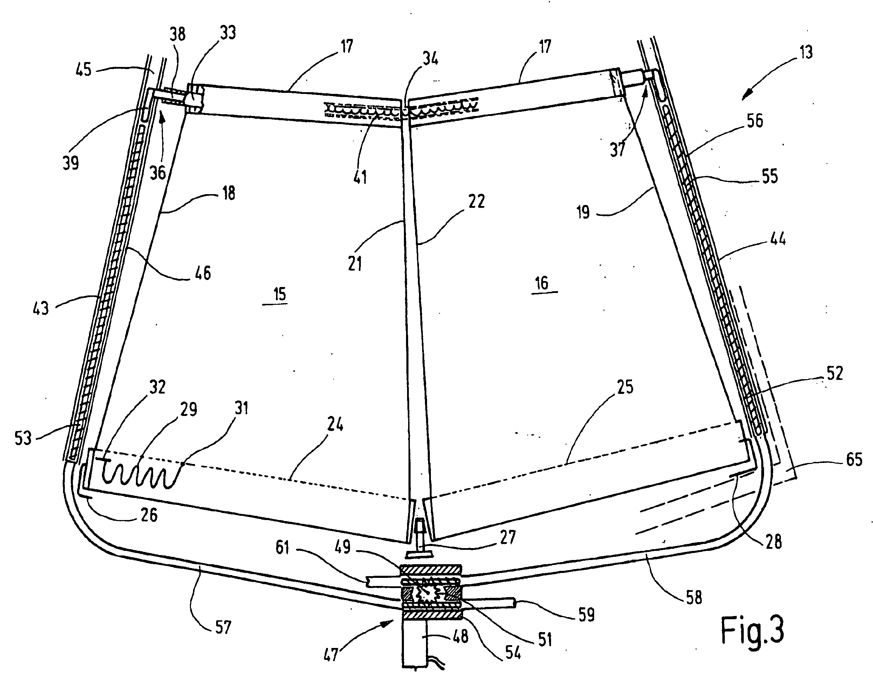

Den Aufbau des Fensterrollos 13 nach den vorhergehenden Figuren zeigt Figur 3 in einer stark schematisierten Darstellung.

Zu dem Fensterrollo 13 gehören zwei Wickelwellen 24 und 25 die unterhalb der Hutablage 9 drehbar gelagert sind. Hierzu sind an der Hutablage schematische gezeigte Lagerböcke 26, 27 und 28 befestigt, in denen die beiden Wickelwellen 24 und 25 drehbar gelagert sind. Jede Wickelwelle 24 und 25 besteht aus einem zylindrischen Rohr, in dessen Inneren eine Schraubenfeder 29 angeordnet ist. Die Schraubenfeder 29 ist bei 31 mit der Wickelwelle 24 verbunden, während ihr anderes Ende 32 beispielsweise an einem in dem Lagerbock 26 drehfesten Lagerzapfen verankert ist. Mit Hilfe der Schraubenfeder 29, die als Federmotor dient, wird die Wickelwelle 24 im Sinne des Aufwickelns der Rollobahn 15 vorgespannt. Die Wickelwelle 25 ist in derselben Weise mit einem Federmotor versehen, weshalb sich eine erneute Beschreibung erübrigt.

Die beiden Wickelwellen 24 und 25 liegen unterhalb der Hutablage 9 in einer parallelen Ebene, und sind entsprechend der gewünschten polygonalen Annäherung an die Krümmung der Heckscheibe zueinander im Winkel angeordnet, wie dies Figur 3 schematisch erkennen lässt.

An der Wickelwelle 24 ist die Rollobahn 15 mit ihrer unteren, zu der Querkante 17 etwa parallel Querkante befestigt. Sinngemäß das Gleiche gilt für die Rollobahn 16, die ebenfalls mit ihrer unteren Querkante an der Wickelwelle 25 festgelegt ist.

Die obere Querkante 17 der beiden Rollobahnen 15, 16 bildet eine Schlaufe, in der eine rohrförmige Zugstange 33 steckt, deren Länge der kleinsten Breite der Heckscheibe entspricht und die bei 34 abgewinkelt ist, damit sie etwa parallel zu den beiden Wickelwellen 25 und 25 verläuft. Das Rohr, das den Zugstab 33 bildet ist beispielsweise längsoval, wobei die größte Achse in Richtung parallel zu der Rollbahn 15 bzw. 16 liegt.

Von jedem Ende her steckt in dem Rohr 33 ein L-förmig abgewinkeltes Führungsglied 36 bzw. 37. Das Führungsglied 36 weist einen Schaft 38 auf, dessen Querschnitt an die lichte Weite des Rohres 33 angepasst ist, so dass der Schaft 38 längsverschieblich jedoch unverdrehbar in dem Rohr steckt. Etwa rechtwinklig zu dem Schaft 38 verläuft ein Führungsteil 39.

Das Führungsglied 37 hat denselben jedoch spiegelbildlichen Aufbau wie das Führungsteil 36, so dass sich eine erneute Beschreibung in soweit erübrigt.

Im Inneren des Zugstabs 33 liegt eine Druckfeder 41, die endseitig mit den Schäften 38 der beiden Führungsglieder 36 und 37 verbunden ist. Sie ist bestrebt die Schäfte 38 der Führungsglieder 36 und 37 aus dem Zugstab 33 zu drücken.

Seitlich neben den beiden Längskanten 18 und 19 verläuft je eine C-förmige Führungsschiene 43, 44. Die beiden Führungsschienen 43 und 44 sind in dem Fahrzeug jeweils nach außen hin durch die C-Säulen 4 und 5 abgedeckt und somit in den beiden Figuren 1 und 2 nicht erkennbar.

Die Führungsschiene 43 ist längs geschnitten veranschaulicht, und sie enthält einen im wesentlichen zylindrischen Innenraum 45, der sich über einen Schlitz 46 nach außen zu öffnet. Der Innenraum 45 und das Führungsteil 39 sind so aneinander angepasst, dass das Führungsteil 39 ohne zu klemmen in dem Innenraum 45 gleiten kann, während der Schaft 38 durch den Schlitz 46 nach außen ragt.

Infolge des abgewinkelten Verlaufs des Führungsteils 39 im Zusammenspiel mit der ovalen Gestalt des Zugstabs 33 wird der Zugstab 33 in einer Raumlage gehalten, derart, dass trotz des Knicks 34 der Zugstab 33 eine Ebene aufspannt, die immer näherungsweise zu der Ebenen parallel bleibt, die durch die Hutablage 9 definiert ist. Die Druckfeder 41 drückt die beiden Führungsglieder 36 und 37 nach außen. Sie liegen mit Vorspannkraft an der dem Schlitz 46 gegenüberliegenden Seite des Innenraums 45 an.

Die Führungsschiene 44 hat dieselbe Querschnittsgestalt wie die Führungsschiene 43, womit sich wiederum eine erneute Wiederholung der Beschreibung des Aufbaus der Führungsschiene 44 erübrigt.

In der Ruhestellung des Fensterrollos 13 sind die beiden Rollobahnen 15 und 16 auf die zugehörigen Wickelwellen 24 und 25 aufgewickelt. Um die Rollobahnen 15 und 16 von den Wickelwellen 24 und 25 abzuwickeln, ist eine weitere Antriebseinrichtung in Gestalt eines Getriebemotors 47 vorgesehen, zu dem ein permanenterregter Gleichstrommotor 48 gehört, der über das Bordnetz des Fahrzeugs 1 wahlweise in Gang gesetzt werden kann. Auf einer Ausgangswelle 49 des Getriebemotors sitzt ein Ausgangszahnrad 51 das mit zwei SUflexwellen™ 52 und 53 in Eingriff steht, die tangential an gegenüberliegenden Seiten des Zahnrades 51 durch entsprechende Führungskanäle in dem Getriebegehäuse 54 hindurchführen. Eine SUflexwelle™ setzt sich aus einem im wesentlichen zylindrischen flexiblen Kern 55, beispielsweise in Form einer Litze, und einer darauf befestigten Drahtwendel 56 zusammen, die ein ein- oder mehrgängiges Gewinde bildet.

Auf diese Weise wird eine flexible schraubenförmig verzahnte Zahnstange erhalten, die mit Hilfe des Zahnrads 51 in axialer Richtung bewegt werden kann.

Von dem Getriebemotor 57 führt ein erstes Führungsrohr 57 zu dem unteren Ende der geraden Führungsschiene 43, während ein zweites Führungsrohr 58 den Getriebemotor mit dem unteren Ende der ebenfalls geraden Führungsschiene 44 verbindet. In den beiden Führungsrohren 57 und 58 erstrecken sich die bereits erwähnten beiden SUflexwellen™ 52 und 53. An der jeweils gegenüberliegenden Seite sind abgeschnitten veranschaulichte Speicherrohre 59 und 61 angeschlossen, in denen der zurückgeschobene Teil der SUflexwellen™ 52 und 53 geschützt aufbewahrt wird, wenn das Fensterrollo 13 völlig eingefahren ist.

Zur Erläuterung der Funktion sei angenommen, dass das Fensterrollo 13, wie Figur 3 zeigt, vollständig ausgefahren ist. Dazu war zuvor der Getriebemotor 47 in Gang gesetzt worden, wodurch die beiden SUflexwellen 52 und 53 in die Innenräume 45 der beiden Führungsschienen 43 und 44 vorgeschoben worden sind. Die jeweils freien Enden der beiden SUflexwellen 52 und 53 stoßen stumpf gegen die unteren Enden der Führungsteile 39, und haben damit die beiden Führungsglieder 36 und 37 nach oben in Richtung auf die Dachunterkante 7, d.h. die Fensteroberkante des Heckfensters vorgeschoben. Bei der Vorschubbewegung wurden die Rollbahnen 15, 16 gegen die Wirkung der Federmotoren 29 von den zugehörigen Wickelwellen 24 und 25 abgewickelt.

Der Getriebemotor 47 ist selbsthemmend. Die beim Abschalten des Getriebemotors 47 erreichte Stellung der SUflexwellen 52 und 53 bleibt erhalten.

Zum Einfahren des Fensterrollos 13 wird der Getriebemotor 47 mit der umgekehrten Drehrichtung in Gang gesetzt. Im Zusammenspiel zwischen dem Zahnrad 51 und der Drahtwendel 56 auf den Kernen 55 der beiden SUflexwellen 52, 53, werden diese aus den beiden Führungsschienen 43, 44 zurückgezogen und in die zugehörigen Speicherrohre 59 und 61 geschoben. Weil in den Rollobahnen 15, 16 aufgrund der Federmotoren 29, eine ständige Kraft wirkt, die bestrebt ist, die obere Querkante 17 in Richtung auf die Wickelwellen 24, 25 zu ziehen, wird die obere Querkante 17 nach unten wandern, in dem Maße, in dem dies die zurückweichenden SUflexwellen 52, 53 ermöglichen.

Während des Einfahrens ändert sich der Abstand zwischen den beiden Führungsschienen 43 und 44, den die Zugstange 33 sieht. Die beiden Führungsteile 36 und 37, die mit ihrem Schaft 38 in der Zugstange 33 längsverschieblich geführt sind, werden, unterstützt durch die Druckfeder 41, nach außen geschoben, um die Abstandsänderung aufzunehmen.

Die Verwendung einer Druckfeder ist vorteilhaft, weil sie in Verbindung mit der Ausrichtung der Führungsschienen 43 und 44, eine Kraft in Richtung auf die Wickelwellen 24 und 25 entstehen lässt und so die Wirkung der Federmotoren 29 unterstützt.

Da sich beim Einfahren gleichzeitig der Abstand zwischen den Längskanten 21 und 22 verändert, gleiten die als Schlaufen ausgebildeten Querkanten 17 der beiden Rollobahnen 15 und 16 auf der Zugstange 33 axial nach außen.

Die Anordnung ist weitgehend selbstzentrierend, weil die beiden Führungsteile 36 und 37 nur gegeneinander aber nicht gegen die Zugstange 33 vorgespannt sind. Die Zentrierung kann verbessert werden, wenn die Schlaufen der Rollobahnen 15, 16 nicht unmittelbar auf der Zugstange 33 stecken, sondern eine Gleithülse eingefügt ist.

Die Führungsschienen 43 und 44 sowie der Getriebemotor 47 und die Lagerböcke 26, 27, 28 für die Wickelwellen 24 und 25 können zusammen auf einem schematisch angedeuteten Montagerahmen 65 angebracht sein. Auf diese Weise wird eine vormontierte Einheit erhalten, die im Stück in der Karosserie des Fahrzeugs 1 montiert werden kann. Bei der Montage des Fahrzeugs auf dem Band brauchen bei einer vormontierten Heckscheibenkonstruktion nicht mehr die Teile einzeln im Fahrzeug montiert zu werden.

Der gesamte Montagerahmen 65, an dem die erwähnten Teile fest betriebsfertig eingebaut sind, ist in Figur 3 lediglich sehr stark schematisiert gezeigt. Seine spezielle Gestalt ist von den jeweiligen Einbauverhältnissen in dem Kraftfahrzeug 1 abhängig.

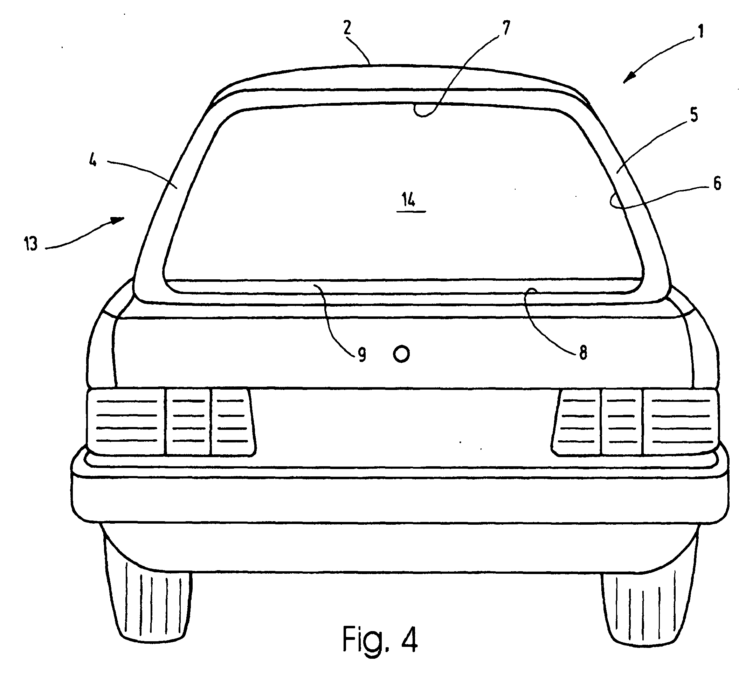

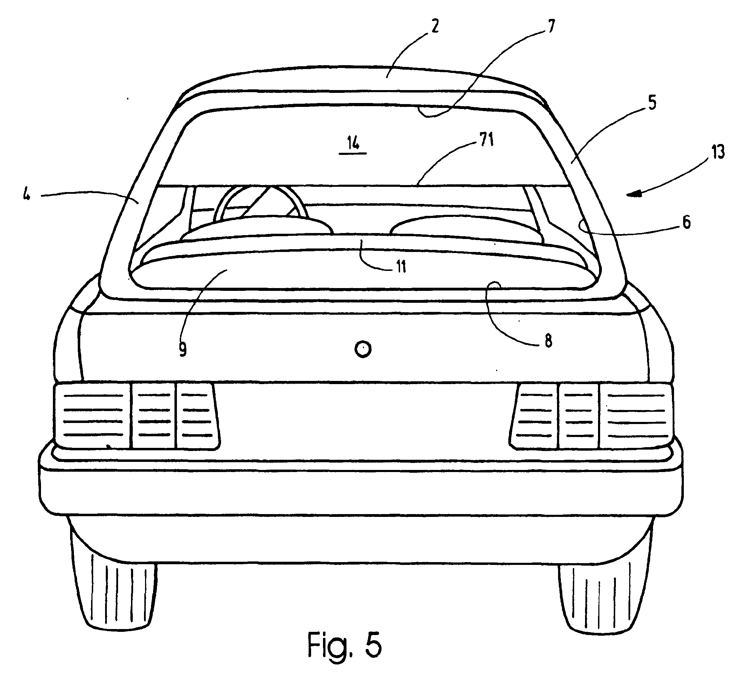

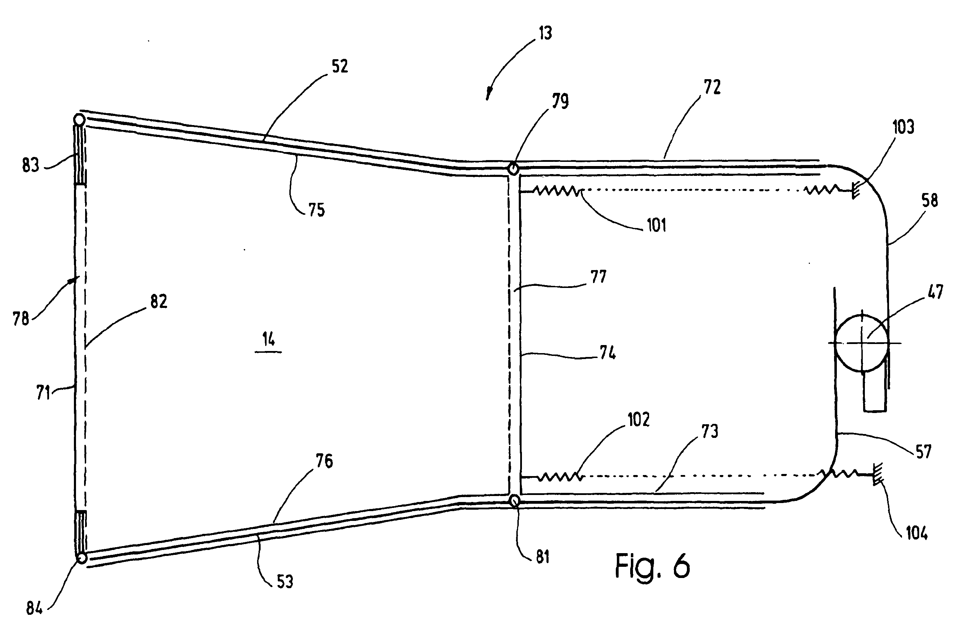

In den Figuren 4 und 5 ist ein Heckscheibenrollo 13 gezeigt, dessen Rollobahnmittel 14 bei nicht Gebrauch in dem Hohlraum des Daches 2 verstaut wird. Figur 4 zeigt die vollständige Abschattung des Heckfensters über das Rollobahnmittel 14, während in Figur 6 das Fensterrollo 13 teilweise eingefahren ist und eine Unterkante 71 etwa parallel zur Mitte des Heckfenster verläuft.

Den Aufbau des Fensterrollos 13 für die Anordnung nach den Figuren 4 und 5 ist in Figur 6 gezeigt.

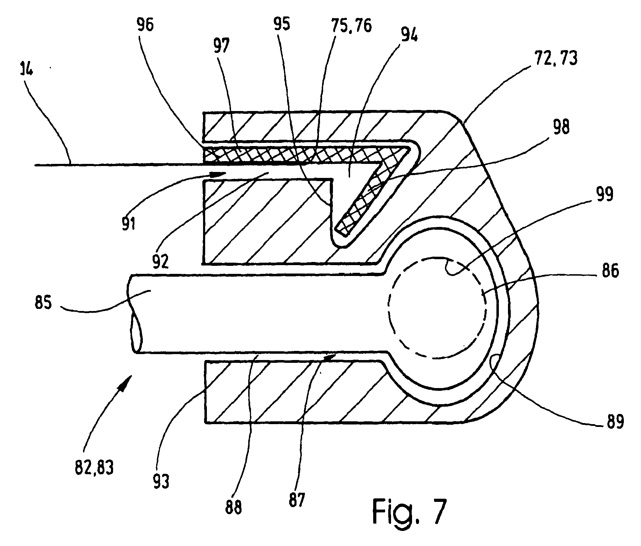

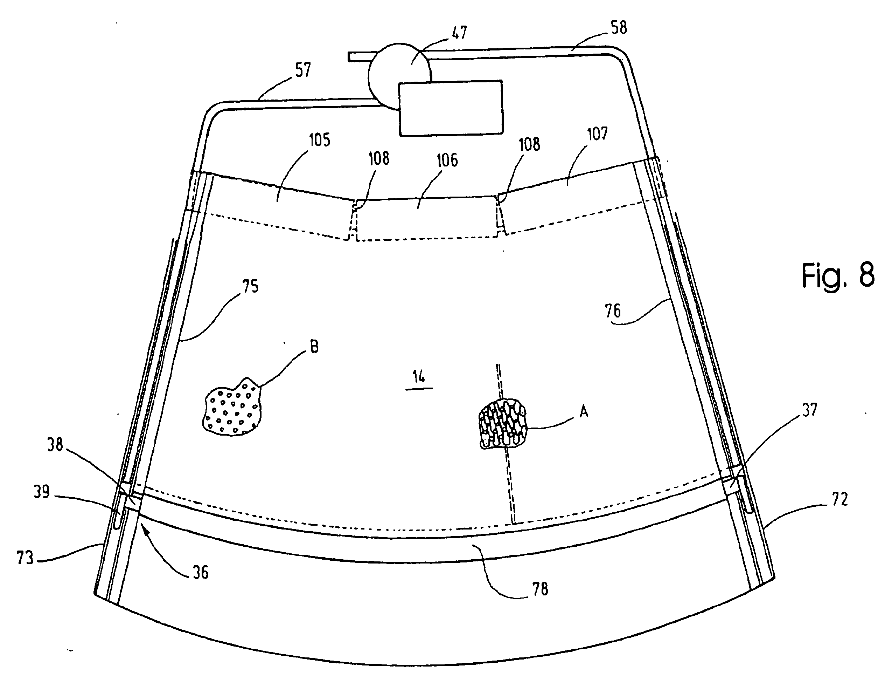

Bekanntlich weist das Dach von Kraftfahrzeugen einen Hohlraum auf, der zur Fahrgastseite hin vom Dachhimmel und nach außen durch die Blechhaut der Karosserie begrenzt ist. In diesem Innenraum verlaufen parallel zueinander zwei Führungsschienen 72 und 73, die in der Nähe der Dachhinterkante aus dem Dachhimmel durch einen im Dachhimmel enthaltenen Rolloschlitz austreten und sich von dort seitlich neben den Rändern des Heckfensters in Richtung auf die Hutablage 9 erstrecken. An der Austrittsstelle aus dem Dachinnenraum gehen sie, wie Figur 7 zeigt, aus der parallelen Zuordnung in eine divergierende Anordnung über und gleichzeitig sind sie entsprechend der Winkelstellung der Heckscheibe gegenüber dem Dach nach unten abgebogen. Zwischen diesen beiden Führungsschienen 72 und 73 ist die Rollobahn 14 geführt. Die Rollobahn 14 besteht bei diesem Ausführungsbeispiel aus einer Maschenware, d.h. aus einem Gewirk oder Gestrick, wie es ausschnittsweise in Figur 8 bei A gezeigt ist.

Ein Gewirk hat bekanntlich die Eigenschaft in beiden Achsrichtungen dehnbar zu sein. Diese Eigenschaft erhält die Maschenware aufgrund der Maschenstruktur, weil es in der Maschenstruktur keine Fäden gibt, die wie bei einem Gewebe gestreckt durchlaufen. Vielmehr sind die Fäden der Maschenware meanderförmig angeordnet, wobei die Meanderschlingen die Maschen darstellen. Ein derartiges Textilgebilde lässt sich sowohl in die Breite als auch in die Länge dehnen.

Die den Fäden innenwohnende Biegeelastizität lässt die Maschenware bei Entspannung weitgehend in die Originalposition zurückkehren.

Eine vergrößerte Rücksprungkraft lässt sich erreichen, indem zusätzlich zu den undehnbaren Fäden Elastomerefäden verwendet werden, beispielsweise Elastan™. Ein Fadenanteil von maximal 6% ist ausreichend um eine genügende Rücksprungkraft hervorzurufen. Dabei wird die Maschenware vorzugsweise als plattierte Ware hergestellt, damit der Elastanfaden sich ausschließlich auf einer Seite der Maschenware befindet, beispielsweise auf der Seite des Fahrzeuginnenraums. Hierdurch wird er weitgehend durch UV-Licht abgeschirmt.

Anstelle einer Maschenware kann auch elastomere Folie verwendet werden, die regelmäßig gelocht ist. Eine solche Struktur ist in Figur 8 bei B ausschnittsweise gezeigt.

Die Rollobahn 14 wird von einer ständig in dem Dachinnenraum bleibenden vorderen Querkante 74, der Unter- oder Hinterkante 71, die zu der Kante 74 etwa parallel verläuft, sowie zwei Längskanten 75 und 76 begrenzt. Sowohl an der Querkante 71 als auch an der Querkante 74 sind Zugstäbe 77 und 78 enthalten. Diese Zugstäbe 77, 78 liegen in bekannter Weise in schlauchförmigen Taschen, die an den Querkanten 71 und 74 ausgebildet sind. Der Zugstab 77 der schematisch durch die gestrichelte Linie angedeutet ist, ist in der Länge unveränderlich und endet in zwei Endstücken 79 und 81, die mit einer Durchgangsbohrung versehen sind.

Der Zugstab 79 setzt sich aus einem Mittelstück 82 mit fester Länge sowie zwei beweglichen Endstücken 83 und 84 zusammen, die in dem rohrförmigen Mittelstück 82 längsverschieblich geführt sind. Die Gestalt des jeweiligen Endstücks 83, 84 wird nachstehend im Zusammenhang mit Figur 7 erläutert, die auch das Querschnittsprofil der Führungsschienen 72 und 73 veranschaulicht.

Die Endstücke 82 bzw. 83 setzen sich jeweils aus einem zylindrischen Schaft 85 und einem am freien Ende ausgebildeten kugelförmigen Kopf 86 zusammen. An diese Gestalt ist eine erste Führungsnut 87 in der Führungsschiene 72 bzw. 73 angepasst. Sie besteht dementsprechend aus einem parallelflankigem Abschnitt 88, der im Inneren der Führungsschiene 72 bzw. 73 in einen zylindrischen Raum 89 übergeht. Eine weitere Nut 91 verläuft parallel zu der Nut 87. Diese weitere Nut 91 bildet einen paralleflankigen Abschnitt 92, der parallel zu der Nut 87 liegt und sich zu derselben Seite nämlich einer Begrenzungsfläche 93 hin öffnet. Im Inneren der Führungsschiene 72 bzw. 73 geht der Abschnitt 92 in einen Abschnitt 94 mit dreieckförmiger Gestalt über, wodurch eine Schulter 95 entsteht, die parallel zu der Begrenzungsfläche 93 verläuft und rechtwinklig zu dem Abschnitt 92 liegt. Sie geht über die Länge der jeweiligen Führungsschiene 72, 73 ununterbrochen durch.

In der Nut 91 läuft ein Keder 96, der mit der betreffenden Längskante 75 bzw. 76 der Rollobahn 14 vernäht ist. Die Länge des Keders 96 entspricht der Länge der betreffenden Längskante.

Der Keder 96 setzt sich aus einem ersten bandförmigen Abschnitt 97 zusammen, der jenseits der Kante 75 bzw. 76 in einen zweiten bandförmigen Abschnitt 98 übergeht. Der bandförmige Abschnitt 98 bildet eine Lippe oder Leiste, die im entspannten Zustand, wie in Figur 7 gezeigt ist, schräg gegenüber dem bandförmigen Abschnitt 97 verläuft. Die beiden Abschnitte 97 und 98 bilden ein V, dessen Spitze in die Nut 91 hineinragt, während die Lippe oder Leiste 98 zum Zusammenwirken mit der Schulter 95 ausgebildet ist.

Der Keder 96 besteht aus einem federnden elastischen Material, damit die Leiste 98 flach auf den Abschnitt 97 geklappt werden kann.

Die Endstücke 97 und 81 der Zugstange 77 haben grundsätzlich die selbe Gestalt, lediglich mit dem Unterschied, dass der kugelförmige Kopf 86 mit einer Bohrung 99 versehen ist, die in Figur 7 gestrichelt eingezeichnet ist.

Zum Bewegen der Rollobahn 14 ist wiederum ein Getriebemotor 47 vorgesehen, der zwei zugehörige SUflexwellen 52 und 53 antreibt. Die SUflexwellen 52 und 53 verlaufen in dem zylindrischen Abschnitt 89 der Nut 97. Sie führen durch die Bohrung 99 der Endstücke 99 und 81 hindurch und stoßen stumpf gegen die kugelförmigen Köpfe der Endstücke 83 und 84.

Von dem Getriebemotor 47 gehen jeweils Führungsrohre 57 und 58 aus, die die SUflexwellen 52, 53 vom Getriebemotor bis zu dem in dem Dachinnenraum befindlichen Ende der beiden Führungsschienen 72 und 73 führen.

Um die Rollobahn 14 in den Dachraum zurückzuziehen, sind zwei federelastische Zugmittel 101 und 102 vorhanden, z.B. Gummischnüre, die einends mit der Querkante 74 bzw. dem Zugstab 77 verbunden sind und die anderenends bei 104 und 103 in dem Dachinnenraum verankert sind.

Die Funktionsweise des in soweit beschriebenen Fensterrollos 13 ist wie folgt:
Im eingefahrenen Zustand liegt die Rollbahn 14 im wesentlichen zwischen den beiden parallel sich erstreckenden Abschnitten der beiden Führungsschienen 72 und 73. Dieser Teil befindet sich wie zuvor beschrieben im wesentlich in dem Dachraum zwischen der Dachaußenhaut und dem Dachhimmel
Die untere oder hintere Querkante 71 ist bis knapp hinter den Rolloschlitz zurückgezogen, der in dem Dachhimmel ausgebildet ist. Die seitlichen Ränder der Rollobahn 14 werden mit Hilfe des Keders 96 in der zugehörigen Nut 91 geführt und gehalten.

Zum Ausfahren der Rollobahn 14, um die Stellung nach Figur 4 zu erreichen, wird der Getriebemotor 47 eingeschaltet, der daraufhin die zugehörigen SUflexwellen 52, 53 in Richtung auf das untere Ende der beiden Führungsschienen 72 und 73 vorschiebt. Bei dieser Bewegung nehmen die an dem kugelförmigen Köpfen anstoßenden SUflexwellen 52 und 53 die hintere bzw. untere Zugstange 78 mit, die daraufhin die Rollobahn 14 aus dem Dachinnenraum herauszieht und deren untere Querkante 71 in Richtung auf die Hutablage 9 bewegt. Dabei wird gleichzeitig die in Querrichtung elastische dehnbare Rollobahn 14 gedehnt, weil die Keder 96, die durchgehend an den Längskanten 75 und 76 befestigt sind, mit der Lippe 98 in der Nut 91 gefangen bleiben. Sie wirken als Spannmittel.

Zum Einfahren wird der Getriebemotor 47 in der entgegengesetzten Richtung in Gang gesetzt und es werden die SUflexwellen 52 und 53 in den Führungsschienen 72 und 73. zurückgezogen. Die an der hinteren Querkante 74 angreifenden Zugmittel 101 und 102 können daraufhin die Rollobahn 14 in den Dachraum zurückziehen.

In jeder Betriebstellung sorgen die Zugmittel 101 und 102 dafür, die Rollobahn 14 in Längsrichtung gespannt zu halten.

Da bei der Hin- und Herbewegung zwischen dem eingefahrenen und ausgefahrenen Zustand nahezu keine Abstandsänderung zwischen den beiden Querkanten 71 und 74 auftritt, können die SUflexwellen 52 und 53 auch an den Endstücken 81 und 79 angreifen, die zu diesem Zweck ohne Bohrung ausgestattet sind. Der Abstand zwischen dem Endstück 79 und dem Endstück 83 bzw. dem Endstück 81 und 84 wird statt dessen durch einen entsprechendes schubsteifes elastisches Glied erzeugt, das in dem zylindrischen Abschnitt 89 der Führungsnut 87 eingelegt ist. Diese Anordnung hat den Vorteil, dass die elastischen Zugmittel 101 oder 102 entfallen können. Statt dessen wird mit Hilfe einer formschlüssigen Verbindung zwischen den SUflexwellen 52 und 53 mit den zugehörigen Endstücken 79 und 81 die Rollbahn hin- und hergeschoben.

Auch bei dem Ausführungsbeispiel nach Figur 6 können die Führungsschienen 72, 73 zusammen mit dem Getriebemotor 47 in einem Montagerahmen funktionsfertig vormontiert werden, um den Einbau im Fahrzeug am Fertigungsband zu erleichtern.

Anstatt die Rollobahn 14, wie in Figur. 6 veranschaulicht, ständig aufgespannt zu halten, besteht auch die Möglichkeit die Rollobahn im verstauten Zustand auf eine Wickelwelle aufzuwickeln, wie dies von Fensterrollos in Kraftfahrzeugen grundsätzlich bekannt ist und auch beispielsweise in den Figuren 3 und 4 in Verbindung mit einer geteilten Wickelwelle gezeigt ist.

Da für gewöhnlich das Dach eines Kraftfahrzeuges erheblich bombiert ist, bestehen Schwierigkeiten, eine lange gerade Wickelwelle unterzubringen. Für diesen Fall bietet sich eine Lösung nach Figur 8 an. Hierbei setzt sich die Wickelwelleneinrichtung aus insgesamt 3 Wickelwellen 105, 106 und 107 zusammen, die in dem Dachraum in bekannter Weise drehbar gelagert sind.

Ihre Achsen sind so ausgerichtet, dass sie polygonal die Dachkrümmung annähern, was in Figur 8 entsprechend angedeutet ist.

In der starken Schematisierung von Figur 8 ist zur Sichtbarmachung der Lage der Wickelwellen 105...107 zueinander ihrer Raumrichtung gegenüber der Ebene der aufgespannten Rollobahn 14 gedreht. In Wahrheit spannen die Wickelwelle 105...I07 eine Ebene auf, die gegenüber der Ebene definiert durch die ausgefahrene Rollobahn unter einem Winkel verläuft, der um 90° größer ist als der Außenwinkel gemessen zwischen der Ebene des Daches und der Ebene der Heckscheibe.

Die Wickelwellen 105...107 sind so angeordnet, dass sich ihre Drehachsen schneiden. Sie sind untereinander durch schematisch angedeutete Mittelnehmer 108 gekoppelt. Wenigstens eine der Wickelwellen 105...107 ist mit einem Federmotor ähnlich dem Federmotor 29 nach Figur 3 ausgestattet, um sämtliche Wickewellen 105....107 in Aufwickelrichtung der Rollobahn 14 vorzuspannen.

Die Rollobahn 14 besteht wie bei dem Ausführungsbeispiel nach Figur 6 aus einer Maschenware oder einer gelochten Folie und sie ist an ihren beiden seitlichen Rändern 75 und 76 durchgehend mit dem Keder 96 versehen. Die seitlichen Führungsschienen 72 und 73 weisen das in Figur 7 gezeigte Querschnittsprofil auf. Die an der Unter- oder Hinterkante vorhandene Zugstange 78 ist gemäß Figur 3 ausgeführt.

Beim Einfahren des Fensterrollos 13 nach Figur 8 wickelt sich die Rollobahn 14 auf der bogenförmig gekrümmten Gruppe von Wickelwellen 105...107 auf. Hierbei laufen auch die an den Längskanten 75, 76 befestigten Keder 96 entsprechend aus der betreffenden Führungsnut 91 heraus und werden mit auf den Wickelwellen 105 und 107 aufgewickelt. Dabei wird die Leiste 98 flach auf den Abschnitt 97 aufgelegt.

Auch im vollständig eingefahrenen Zustand verbleibt ein kurzer Abschnitt der beiden Keder 96 in den Führungsschienen 72 und 73, die im übrigen in einem kurzen Abstand vor dem außen liegenden Enden der beiden Wickelwellen 105 und 107 enden. Beim Ausfahren sorgt der in den Führungsschienen 72, 73 verbliebene Rest der Keder 96, dafür dass der zuvor aufgewickelte Abschnitt des jeweiligen Keders 96 wieder zurück in die betreffende Führungsnut 91 findet, um wie in Figur 8 gezeigt, die Rollobahn 14 in Querrichtung zu strecken.

Im übrigen geschieht der Antrieb der Rollobahn 14, wie dies im Zusammenhang mit Figur 3 bereits erläutert ist.

Die Verwendung eines Montagerahmens ähnlich dem Montagerahmen nach Figur 3 ist auch bei dem Ausführungsbeispiel nach Figur 8 möglich.

Ein Fensterrollo für Kraftfahrzeuge weist ein Rollobahnmittel 14 auf, dass dafür eingerichtet ist, sich beim Ein- und Ausfahren an die Gestalt der Scheibe anzupassen, und zwar hinsichtlich der breiten Abmessungen und/oder hinsichtlich der Krümmung. Zu diesem Zweck besteht die Rollobahnmittel 14 entweder aus einer in Querrichtung dehn- oder streckbaren Rollobahn oder aus zwei oder mehreren undehnbaren Rollobahnen 15, 16 die im ausgefahrenen Zustand in gewünschter Weise die Scheibengestalt des betreffenden Fensters approximieren. In allen Fällen kann ein zusätzlicher Montagerahmen 65 verwendet werden, in dem die zu dem Fensterrollo gehörenden Teile angeordnet, bzw. gelagert sind, um auf diese Weise eine Baueinheit zu schaffen, die als ganzes am Fertigungsband in das Fahrzeug eingebaut werden kann.

## Patentansprüche

1. Fensterrollo für (13) Kraftfahrzeuge, das längs eines Betätigungsweges ein- und ausfahrbar ist,
mit einer Rollobahn (14), die von zwei Längskanten (18,19,75,76) begrenzt ist, die parallel oder im spitzen Winkel zu dem Betätigungsweg verlaufen, wobei die Rollobahn (14), die aus einer elastisch dehnbaren Folie besteht, in der Breite veränderlich ist, derart, dass zwei beliebige Punkte, die auf unterschiedlichen Längskanten (18,19,75,76) jeweils auf gleicher Höhe liegen beim Ein- und Ausfahren ihren Abstand voneinander ändern,
mit Mitteln (43,44,72,73) zum Verändern der Breite der Rollobahn (14),
mit Antriebsmittel (29,47) zum Bewegen der Rollobahn (14) und
mit Verstaumitteln (24,25,105,106,107) zum Verstauen der eingefahren Rollobahn (14).

2. Fensterrollo für (13) Kraftfahrzeuge, das längs eines Betätigungsweges ein- und ausfahrbar ist,
mit einem Rollobahn (14), die von zwei Längskanten (18,19,75,76) begrenzt ist, die parallel oder im spitzen Winkel zu dem Betätigungsweg verlaufen, wobei das Rollobahn (14), die aus einer Maschenware besteht, in der Breite veränderlich ist, derart, dass zwei beliebige Punkte, die auf unterschiedlichen Längskanten (18,19,75,76) jeweils auf gleicher Höhe liegen beim Ein- und Ausfahren ihren Abstand voneinander ändern,
mit Mitteln (43,44,72,73) zum Verändern der Breite der Rollobahn (14),
mit Antriebsmittel (29,47) zum Bewegen der Rollobahn (19) und
mit Verstaumitteln (24,25,105,106,107) zum Verstauen der eingefahren Rollobahn (14).

3. Fensterrollo nach Anspruch 1 oder 2, **dadurch gekennzeichnet, dass** die Rollobahn (14) aus einem nur in der Breite elastisch dehnbaren Material besteht.

4. Fensterrollo nach Anspruch 1, **dadurch gekennzeichnet, dass** die Folie gelocht ist.

5. Fensterrollo nach Anspruch 2, **dadurch gekennzeichnet, dass** die Maschenware zusätzlich zu wenigstens einem undehnbaren Faden wenigstens einen elastisch dehnbaren Faden, beispielsweise Elastan™, enthält.

6. Fensterrollo nach Anspruch 1, **dadurch gekennzeichnet, dass** die in der Breite veränderliche Rollobahn (14) von lediglich einer Rollobahn gebildet ist.

7. Fensterrollo nach Anspruch 1, **dadurch gekennzeichnet, dass** die Mittel (43,44,72,73) zum Verändern der Breite der Rollobahn (14) wenigstens zwei Führungsschienen (43,44,72,73) umfassen, die sich längs des Betätigungsweges erstrecken und deren Abstand voneinander sich ändert.

8. Fensterrollo nach Anspruch 7, **dadurch gekennzeichnet, dass** in den beiden Führungsschienen (43,44,72,73) ein Zugstab (34) geführt ist, der in der Länge verstellbar ausgebildet ist.

9. Fensterrollo nach Anspruch 7, **dadurch gekennzeichnet, dass** jede der beiden Führungsschienen (43,44, 72,73) eine zugehörige und in Längsrichtung der jeweiligen Führungsschiene (43,44,72,73) sich erstreckende Nut (91) enthält, die im Bereich ihres Nutenschlitzes (92) eine geringere Weite aufweist als in ihrem Inneren (94), derart, dass wenigstens eine in den Nutenschlitz (92) vorspringende Schulter (95) entsteht, und dass die Rollobahnmittel (14) an ihren Längskanten (18,19,75,76) Streckmittel (96) aufweisen, die in den Nuten (91) geführt sind und die derart gestaltet sind, dass sie die Schulter (95) hintergreifen, um quer zu der Nut (91) eine Querzugkraft für das Rollobahnmittel (14) erzeugen zu können.

10. Fensterrollo nach Anspruch 9, **dadurch gekennzeichnet, dass** die Streckmittel (96) von einem Keder gebildet sind, der an der jeweiligen Längskante (18,19,75,76) befestig ist und über die Länge der Längskante (18,19, 75,76) durchläuft.

11. Fensterrollo nach Anspruch 10, **dadurch gekennzeichnet, dass** der Keder (96) mit wenigstens einer elastisch abgespreizten Leiste (98) versehen ist, die über die Länge des Keders (96) durchläuft.

12. Fensterrollo nach Anspruch 9, **dadurch gekennzeichnet, dass** jede der Führungsschienen (43,44,72,73) eine zweite Nut (87) enthält, die zu der ersten Nut (91) für die Streckmittel (96) parallel verläuft.

13. Fensterrollo nach Anspruch 1 oder 2, **dadurch gekennzeichnet, dass** die Verstaumittel (24,25,105,106,107) eine drehbar gelagerte Wickelwelleneinrichtung (24,25,105, 106,107) umfassen, an der mit einer Querkante das Rollobahnmittel (14) befestigt ist.

14. Fensterrollo nach Anspruch 13, **dadurch gekennzeichnet, dass** sich die Wickelwelleneinrichtung (24,25, 105,106,107) aus wenigstens zwei Wickelwellen zusammensetzt, von denen jede für sich drehbar gelagert ist.

15. Fensterrollo nach Anspruch 14, **dadurch gekennzeichnet, dass** jede der Wickelwellen (24,25,105,106,107) mit einer Antriebseinrichtung (29) versehen ist.

16. Fensterrollo nach Anspruch 13, **dadurch gekennzeichnet, dass** die Wickelwellen (24,25,105,106,107) drehfest miteinander gekuppelt sind und eine gemeinsame Antriebseinrichtung (29) aufweisen.

17. Fensterrollo nach Anspruch 14, **dadurch gekennzeichnet, dass** die Wickelwellen (24,25,105,106,107) einen entgegengesetzten Wickelsinn aufweisen.

18. Fensterrollo nach Anspruch 14, **dadurch gekennzeichnet, dass** die Drehachsen der Wickelwellen (24,25, 105,106,107) zueinander in einem Winkel ausgerichtet sind, der von 180° abweicht.

19. Fensterrollo nach Anspruch 14, **dadurch gekennzeichnet, dass** die Rollobahn (14) von einer einzigen Rollobahn gebildet sind, die auf mehrere Wickewellen (24,25, 105,106,107) aufgewickelt wird, deren Drehachsen zueinander in einem Winkel ausgerichtet sind, der von 180° abweicht.

20. Fensterrollo nach Anspruch 1 oder 2, **dadurch gekennzeichnet, dass** wenigstens zwei Rollobahnen (15,16) vorhanden sind und dass für sämtliche Rollobahnen (15,16) ein gemeinsamer Zugstab (33) vorhanden ist, der in den Führungsschienen (43,44) endseitig geführt ist und der längenverstellbar gestaltet ist.

21. Fensterrollo nach Anspruch 1 oder 2, **dadurch gekennzeichnet, dass** die Antriebseinrichtung wenigstens eine Feder (29,101,102) und wenigstens einen Elektromotor (47) umfasst, wobei der Elektromotor (47) mit der Wickelwelleneinrichtung (24,25,105,106,107) und die Feder (101,102) mit einem Zugstab (77) gekoppelt ist, oder umgekehrt.

## Claims

1. Window roller blind (13) for motor vehicles, which can be retracted and extended along an operating path,
with a blind (14), which is defined by two longitudinal edges (18, 19, 75, 76), which run parallel or at an acute angle to the operating path, wherein the blind (14), which is made of an elastically stretchable foil, is variable in width such that the distance between any two points lying respectively at the same height on different longitudinal edges (18, 19, 75, 76) changes during retraction and extension,
with means (43, 44, 72, 73) for varying the width of the blind (14),
with drive means (29, 47) for moving the blind (14), and
with stowing means (24, 25, 105, 106, 107) for stowing the retracted blind (14).

2. Window roller blind (13) for motor vehicles, which can be retracted and extended along an operating path,
with a blind (14), which is defined by two longitudinal edges (18, 19, 75, 76), which run parallel or at an acute angle to the operating path, wherein the blind (14), which is made of a knitted material, is variable in width such that the distance between any two points lying respectively at the same height on different longitudinal edges (18, 19, 75, 76) changes during retraction and extension,
with means (43, 44, 72, 73) for varying the width of the blind (14),
with drive means (29, 47) for moving the blind (14), and
with stowing means (24, 25, 105, 106, 107) for stowing the retracted blind (14).

3. Window roller blind according to Claim 1 or 2, **characterised in that** the blind (14) is made from a material, which is elastically stretchable only in width.

4. Window roller blind according to Claim 1, **characterised in that** the foil is perforated.

5. Window roller blind according to Claim 2, **characterised in that** in addition to at least one non-stretchable thread the knitted material contains at least one elastically stretchable thread, e.g. Elastane™.

6. Window roller blind according to Claim 1, **characterised in that** the blind (14), which is variable in width, is formed from only one blind sheet.

7. Window roller blind according to Claim 1, **characterised in that** the means (43, 44, 72, 73) for varying the width of the blind (14) comprise at least two guide rails (43, 44, 72, 73), which extend along the operating path and the distance between which changes.

8. Window roller blind according to Claim 7, **characterised in that** a pull rod (34), which is adjustable in length, is guided in the two guide rails (43, 44, 72, 73).

9. Window roller blind according to Claim 7, **characterised in that** each of the two guide rails (43, 44, 72, 73) contains an associated groove (91), which extends in the longitudinal direction of the respective guide rails (43, 44, 72, 73) and has a smaller width in the region of its groove slot (92) than in its interior (94), such that at least one shoulder (95) projecting into the groove slot (92) is formed, and that on their longitudinal edges (18, 19, 75, 76) the blind elements (14) have stretching means (96), which are guided in the grooves (91) and which are configured such that they engage behind the shoulders (95) to be able to generate a transverse pulling force for the blind element (14) transversely to the groove (91).

10. Window roller blind according to Claim 9, **characterised in that** the stretching means (96) are formed by a weatherstrip, which is fastened to the respective longitudinal edge (18, 19, 75, 76) and runs continuously over the length of the longitudinal edge 18, 19, 75, 76).

11. Window roller blind according to Claim 10, **characterised in that** the weatherstrip (96) is provided with at least one elastically supported strip (98), which runs continuously over the length of the weatherstrip (96).

12. Window roller blind according to Claim 9, **characterised in that** each of the guide rails (43, 44, 72, 73) contains a second groove (87), which runs parallel to the first groove (91) for the stretching means (96).

13. Window roller blind according to Claim 1 or 2, **characterised in that** the stowing means (24, 25, 105, 106, 107) comprise a rotatably disposed winding shaft assembly (24, 25, 105, 106, 107), to which the blind element (14) is fastened at a transverse edge.

14. Window roller blind according to Claim 13, **characterised in that** the winding shaft assembly (24, 25, 105, 106, 107) is composed of at least two winding shafts, each of which is separately rotatably disposed.

15. Window roller blind according to Claim 14, **characterised in that** each of the winding shafts (24, 25, 105, 106, 107) is provided with a drive unit (29).

16. Window roller blind according to Claim 13, **characterised in that** the winding shafts (24, 25, 105, 106, 107) are coupled to one another to be fixed against rotation and have a common drive unit (29).

17. Window roller blind according to Claim 14, **characterised in that** the winding shafts (24, 25, 105, 106, 107) have an opposed winding direction.

18. Window roller blind according to Claim 14, **characterised in that** the rotational axes of the winding shafts (24, 25, 105, 106, 107) are oriented at an angle from one another, which differs from 180°.

19. Window roller blind according to Claim 14, **characterised in that** the blinds (14) are formed from a single blind sheet, which is wound onto several winding shafts (24, 25, 105, 106, 107), the rotational axes of which are oriented at an angle from one another, which differs from 180°.

20. Window roller blind according to Claim 1 or 2, **characterised in that** at least two blind sheets (15, 16) are provided, and that for all blind sheets (15, 16) a common pull rod (33) is provided, which is guided at its ends in the guide rails (43, 44) and is adjustable in length.

21. Window roller blind according to Claim 1 or 2, **characterised in that** the drive unit comprises at least one spring (29, 101, 102) and at least one electric motor (47), wherein the electric motor (47) is coupled to the winding shaft assembly (24, 25, 105, 106, 107) and the spring (101, 102) is coupled to a pull rod (77), or vice versa.

## Revendications

1. Store à enrouleur (13) de fenêtre pour véhicules automobiles, qui peut être enroulé et déroulé le long d'un trajet d'actionnement,
avec une bande de store (14), qui est délimitée par deux bords longitudinaux (18, 19, 75,76) qui s'étendent parallèlement au trajet d'actionnement ou forment un angle aigu avec celui-ci, la largeur de la bande de store (14), laquelle est constituée d'un film extensible élastiquement, pouvant être modifiée d'une manière telle que la distance réciproque entre deux points quelconques situés sur des bords longitudinaux (19, 19, 75, 76) différents, mais à la même hauteur, change lors du déroulement ou de l'enroulement,
avec des moyens (43, 44, 72, 73) pour faire varier la largeur de la bande de store (14),
avec des moyens d'entraînement (29, 47) pour déplacer la bande store (14) et
avec des moyens de stockage (24, 25, 105, 106, 107) pour stocker de la bande de store (14) enroulée.

2. Store à enrouleur (13) de fenêtre pour véhicules automobiles, qui peut être enroulé et déroulé le long d'un trajet d'actionnement,
avec une bande de store (14), qui est délimitée par deux bords longitudinaux (18, 19, 75,76) qui s'étendent parallèlement au trajet d'actionnement ou forment un angle aigu avec celui-ci, la largeur de la bande de store (14), laquelle est constituée d'un produit à mailles pouvant être modifiée d'une manière telle que la distance réciproque entre deux points quelconques situés sur des bords longitudinaux (19, 19, 75, 76) différents, mais à la même hauteur, change lors du déroulement ou de l'enroulement,
avec des moyens (43, 44, 72, 73) pour faire varier la largeur de la bande de store (14),
avec des moyens d'entraînement (29, 47) pour déplacer la bande store (14) et
avec des moyens de stockage (24, 25, 105, 106, 107) pour stocker la bande de store (14) enroulée.

3. Store à enrouleur de fenêtre selon la revendication 1 ou 2, **caractérisé par le fait que** la bande de store (14) est formée d'un matériau élastiquement extensible uniquement dans la largeur.

4. Store à enrouleur de fenêtre selon la revendication 1, **caractérisé par le fait que** le film est perforé.

5. Store à enrouleur de fenêtre selon la revendication 2, **caractérisé par le fait que** le produit à mailles contient, outre au moins un fil non extensible, au moins un fil extensible élastiquement, par exemple en élastan™.

6. Store à enrouleur de fenêtre selon la revendication 1, **caractérisé par le fait que** la bande de store (14) à largeur variable est formée d'une seule bande de store.

7. Store à enrouleur de fenêtre selon la revendication 1, **caractérisé par le fait que** les moyens (43, 44, 72, 73) pour faire varier la largeur de la bande de store (14) comprennent au moins deux rails de guidage (43, 44, 72, 73), qui s'étendent le long du trajet d'actionnement et dont la distance réciproque varie.

8. Store à enrouleur de fenêtre selon la revendication 7, **caractérisé par le fait qu'**une barre de traction (34) est guidée dans les deux rails de guidage (43, 44, 72, 73), laquelle barre de traction est réglable en longueur.

9. Store à enrouleur de fenêtre selon la revendication 7, **caractérisé par le fait que** chacun des deux rails de guidage (43, 44, 72, 73) comporte une rainure (91) associée, qui s'étend dans la direction longitudinale du rail de guidage (43, 44, 72, 73) concerné et présente dans la région de l'ouverture de rainure (92) une largeur plus faible qu'à l'intérieur (94), de manière à former au moins un épaulement (95) saillant dans l'ouverture de rainure (92), et que la bande de store (14) présente sur ses bords longitudinaux (18, 19, 75, 76) des moyens d'étirement (96) qui sont guidés dans les rainures (91) et sont conformés de telle sorte qu'ils s'accrochent derrière l'épaulement (95) aux fins de produire une force de traction transversale sur la bande de store (14).

10. Store à enrouleur de fenêtre selon la revendication 9, **caractérisé par le fait que** les moyens d'étirement (96) sont formés d'une ganse (96) qui est fixée au bord longitudinal (18, 19, 75, 76) concerné et s'étend sur la longueur du bord longitudinal (18, 19, 75, 76).

11. Store à enrouleur de fenêtre selon la revendication 10, **caractérisé par le fait que** la ganse (96) est munie d'au moins une aile (98) étirée élastiquement qui s'étend sur l'ensemble de la longueur du bord longitudinal (18, 19, 75, 76).

12. Store à enrouleur de fenêtre selon la revendication 9, **caractérisé par le fait que** chacun des rails de guidage (43, 44, 72, 73) comporte une deuxième rainure (87) qui s'étend parallèlement à la première rainure (91) associée aux moyens d'étirement (96).

13. Store à enrouleur de fenêtre selon la revendication 1 ou 2, **caractérisé par le fait que** les moyens de stockage (24, 25, 105, 106, 107) comprennent un système de barres d'enroulement (24, 25, 105, 106, 107) monté tournant auquel la bande de store (14) est fixée par un bord transversal.

14. Store à enrouleur de fenêtre selon la revendication 13, **caractérisé par le fait que** le système de barres d'enroulement (24, 25, 105, 106, 107) est composé d'au moins deux barres d'enroulement, dont chacune est montée tournante pour elle-même.

15. Store à enrouleur de fenêtre selon la revendication 14, **caractérisé par le fait que** chacune des barres d'enroulement (24, 25, 105, 106, 107) est munie d'un dispositif d'entraînement (29).

16. Store à enrouleur de fenêtre selon la revendication 13, **caractérisé par le fait que** les barres d'enroulement (24, 25, 105, 106, 107) sont solidaires en rotation et présentent un dispositif d'entraînement (29) commun.

17. Store à enrouleur de fenêtre selon la revendication 14, **caractérisé par le fait que** les barres d'enroulement (24, 25, 105, 106, 107) présentent des sens d'enroulement opposés.

18. Store à enrouleur de fenêtre selon la revendication 14, **caractérisé par le fait que** les axes de rotation des barres d'enroulement (24, 25, 105, 106, 107) forment entre eux un angle qui est différent de 180°.

19. Store à enrouleur de fenêtre selon la revendication 14, **caractérisé par le fait que** la bande de store (14) est formée d'une bande de store unique qui est enroulée sur plusieurs barres d'enroulement (24, 25, 105, 106, 107), dont les axes de rotation forment entre eux un angle qui est différent de 180°.

20. Store à enrouleur de fenêtre selon la revendication 1 ou 2, **caractérisé par le fait qu'**il est prévu au moins deux bandes de store (15, 16) et qu'il est prévu pour toutes les bandes de store (15, 16) une barre de traction (33) commune qui est guidée à ses extrémités dans les rails de guidage (43, 44) et dont la longueur est variable.

21. Store à enrouleur de fenêtre selon la revendication 1 ou 2, **caractérisé par le fait que** le dispositif d'entraînement comprend au moins un ressort (29, 101, 102) et au moins un moteur électrique (47), le moteur électrique (47) étant couplé au système de barres d'enroulement (24, 25, 105, 106, 107) et le ressort (101, 102) étant couplé à une barre de traction (77) ou inversement.
